(19) **Europäisches Patentamt**

**European Patent Office**

**Office européen des brevets**

(11) Numéro de publication: **0 262 046 B1**

(12) **FASCICULE DE BREVET EUROPEEN**

(45) Date de publication de fascicule du brevet: **20.05.92** (51) Int. Cl.⁵: **C03B 23/035**

(21) Numéro de dépôt: **87402123.1**

(22) Date de dépôt: **23.09.87**

(54) **Procédé et dispositif de bombage d'une feuille de verre.**

(30) Priorité: **25.09.86 DE 3632556**

(43) Date de publication de la demande:
**30.03.88 Bulletin 88/13**

(45) Mention de la délivrance du brevet:
**20.05.92 Bulletin 92/21**

(84) Etats contractants désignés:
**AT BE CH DE ES FR GB IT LI LU NL SE**

(56) Documents cités:
**DE-A- 3 523 675**
**FR-A- 2 085 464**

(73) Titulaire: **SAINT-GOBAIN VITRAGE INTERNA-TIONAL**
**18, avenue d'Alsace**
**F-92400 Courbevoie(FR)**

(84) Etats contractants désignés:
**BE CH ES FR GB IT LI LU NL SE AT**

(73) Titulaire: **VEGLA Vereinigte Glaswerke GmbH**
**Viktoriaallee 3-5**
**W-5100 Aachen(DE)**

(84) Etats contractants désignés:
**DE**

(72) Inventeur: **Kuster, Hans-Werner, Dr.**
**Schiervierstrasse 20**
**W-5100 Aachen(DE)**
Inventeur: **Schwarznberg, Norbert**
**Wendelinusstrasse 45**
**W-5120 Herzogenrath(DE)**
Inventeur: **Vanaschen, Luc**
**Binsterweg 113**
**B-4700 Eupen(BE)**

(74) Mandataire: **Leconte, Jean-Gérard et al**
**Saint-Gobain Recherche 39, Ouai Lucien Le-franc**
**F-93304 Aubervilliers Cedex(FR)**

Rank Xerox (UK) Business Services
(3.08/2.19/2.0)

## Description

L'invention concerne un procédé de bombage d'une feuille de verre échauffée à la température de formage utilisant un courant gazeux chaud de large section au moyen duquel la feuille de verre est pressée contre une forme de bombage.

Un procédé de bombage de cet art est décrit dans la publication de brevet DE-A-3 523 675. Selon ce procédé, les feuilles de verre échauffées à la température de formage sont transportées suivant un plan horizontal sur une bande transporteuse à rouleaux jusqu'à une stationde bombage. Dans celle-ci les feuilles sont soulevées au-dessus de la bande transporteuse par un courant de gaz chaud orienté de bas en haut suivant la verticale, qui les presse contre une forme de bombage convexe disposée au-dessus des rouleaux de transport. La feuille de verre épouse la courbure de la forme de bombage puis est disposée sur un anneau de transport amené sous la forme de bombage qui évacue la feuille bombée de la station de bombage.

Si on procède ainsi est que les feuilles de verre doivent être bombées selon une forme présentant par exemple des bords localement très recourbés, la pression exerçée sur les bords par le courant gazeux ne suffit pas pour les appliquer exactement contre la forme de bombage aux endroits de plus forte courbure. Finalement le profil de la feuille de verre n'est pas conforme à celui de la forme de bombage. Il a été constaté que cette difficulté ne peut pas être aplanie en augmentant la pression du courant gazeux chaud, c'est à dire sa vitesse de circulation.

Le problème posé par l'invention est d'améliorer le procédé décrit ci-dessus afin de permettre l'obtention de feuilles de verre fortement bombées ou présentant des bords très recourbés.

Selon l'invention ce problème est résolu si au moins dans certaines régions données du bord de la feuille de verre, la vitesse d'écoulement de la composante du courant de gaz chaud parallèle à la feuille de verre est réduite au moyen de déflecteurs disposés sur son trajet, de sorte que dans ces régions données, on augmente la composante de pression statique.

Le procédé selon l'invention utilise, le fait que dans un écoulement gazeux la composante de pression statique s'exerce dans toutes les directions alors qu'au contraire, la composante de pression dynamique n'agit que dans la direction d'écoulement du gaz. Dans les régions du bord de la feuille de verre, les courants normaux à la feuille de verre interceptent celli-ci sous une forme affaiblie car le gaz heurtant la feuille de verre en son centre est déviée par la surface de verre ; dès lors, ce gaz s'écoule de ce fait radialement le long de la feuille et étouffe les courants dirigés initialement vers les bords de la feuille. Si les bords de la forme de bombage présentent une forte courbure ou si les bords ont un angle d'inclinaison défavorable par rapport à la direction du courant gazeux, la pression dynamique normale à la feuille de verre est inférieure à la force de bombage souhaitée en raison des courants parallèles à la surface de verre. Selon l'invention, il y est porté remède par une augmentation localisé et de manière appropriée de la composante de la pression statique. Comme on sait que dans un gaz système fluide en écoulement, pour un filet donné, la somme des composantes de pression statique et dynamique est constante ; la composante statique qui - dans le cas présent est la composante active pour le processus de bombage - s'accroit quand la vitesse d'écoulement de ce filet est réduite. Selon l'invention, la réduction souhaitée, dans certaines régions, de la vitesse d'écoulement est obtenue par la mise en place sur le trajet des courants concernés - ou à l'extrémité de ces courants - de déflecteurs appropriés qui constituent un obstacle et freinent de ce fait les courants de gaz chaud.

Dans un développement avantageux de l'invention, derrière la feuille de verre - c'est à dire entre celle-ci et la forme de bombage - la pression statique est simultanément réduite par une connexion de cet espace intermédiaire avec l'arrière de la forme de bombage.

Selon un premier mode préféré de réalisation du procédé selon l'invention, grâce à une réduction de la section du courant, les courants de gaz chaud s'écoulant radialement le long des bords concernés de la feuille de verre, passent près de l'extrémité de la forme de bombage le long de l'espace intermédiaire entre la forme de bombage et la feuille de verre, créant ainsi une dépression dans cet espace intermédiaire.

Selon un autre mode préféré de réalisation de l'invention, le trajet des courants de gaz chaud s'écoulant radialement le long des bords en cause de la feuille de verre est totalement barré par des déflecteurs placés sur la forme de bombage. De plus, dans l'espace intermédiaire entre la surface de la forme de bombage et ces bords de la feuille de verre, la pression statique du gaz est réduite grâce à des canaux traversant la forme de bombage qui relient cet espace intermédiaire avec une chambre, présentant une pression statique plus faible, située de l'autre côté de la forme de bombage.

L'invention a également pour objet un dispositif de bombage d'une feuille de verre comportant un four , des moyens de transport du verre, une forme de bombage placée dans un conduit et des moyens pour engendrer dans ce conduit un courant de gaz chaud de large section qui presse les feuilles de verre contre la forme de bombage, ce dispositif se distinguant essentiellement par le fait que sur les bords de la forme de bombage, aux endroits où la pression composante de pression statique doit être augmentée, des tôles-chicanes sont disposées quasi perpendiculaires à la tangente à l'extrémité de la forme de bombage la plus proche.

L'invention est expliquée de manière détaillée en référence aux dessins annexés qui représentent :

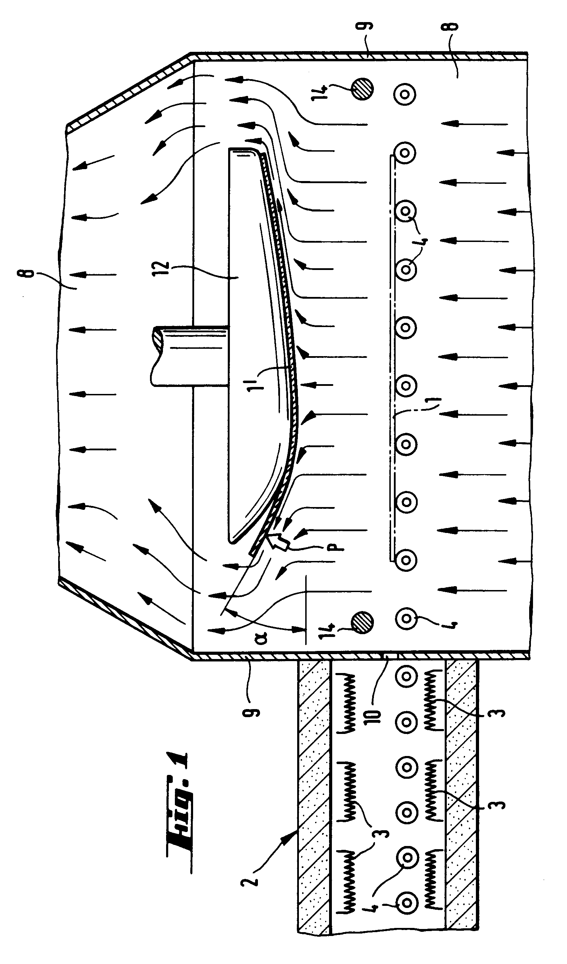

* **figure 1 :** une coupe d'une chambre de bombage d'une feuille de verre par pressage au moyen d'un courant de gaz chaud, suivant l'état de la technique,
* **figure 2 :** un schéma de fonctionnement d'un premier mode de réalisation de l'invention, représenté à partir d'une coupe de la forme de bombage,
* **figure 3 :** un schéma de fonctionnement d'un second mode de réalisation de l'invention, représenté de même à partir d'une coupe de la forme de bombage,
* **figure 4 :** vue en perspective, une forme de bombage avec des tôles-chicanes pour un vitrage automobile,
* **figure 5 :** une vue partielle de dessous de la forme de bombage représentée à la figure 4,
* **figure 6 :** une coupe selon la ligne VI-VI de la figure 5,
* **figure 7 :** une autre configuration des tôles chicanes, représentée en coupe.

Une station de bombage par pressage d'une feuille de verre 1 au moyen d'un courant de gaz chaud, en particulier d'air à haute température est placée à la suite d'un four traversant 2 à rouleaux dans lequel les feuilles de verre sont échauffées à la température de bombage grâce à des résistances électriques 3. Le transport des feuilles de verre 1 se fait en position horizontale, sur les rouleaux moteurs 4 constituant le convoyeur. Ce dernier se prolonge dans la station de bombage.

La station de bombage est essentiellement constituée par un conduit vertical 8 dont les parois 9 sont munies d'une couche d'isolation ther mique appropriée (non représentée). Les feuilles de verre 1 passent du four traversant 2 à la station de bombage par l'ouverture 10 de la paroi 9 voisine du four 2. Dans la station de bombage, elles sont positionnées à l'intérieur du conduit 8, sous la forme de bombage 12. Pendant le transport des feuilles de verre vers la station de bombage et pendant le processus de positionnement, le volume et la pression du courant gazeux sont maintenus à un faible niveau. Ce niveau peut être toutefois maintenu suffisant pour compenser le poids de la feuille de verre 1 afin d'éviter des déformations de la feuille de verre 1 dues à un affaissement entre les rouleaux 4 causé par le poids du verre. Il ne peut s'agir néanmoins que d'un délestage partiel car le transport de la feuille de verre 1 doit être assuré par la rotation des rouleaux 4.

Dès que la feuille de verre a atteint la position souhaitée, la pression et le volume du courant gazeux sont augmentés de manière à ce que la feuille de verre 1 soit soulevée au-dessus des rouleaux 4 et pressée contre la face inférieure de la forme de bombage 12. Sous la feuille bombée 1' est alors introduit un chariot ici non représenté, circulant sur les rails 14 perpendicalaires au plan du dessin et portant un anneau de soutien correspondant à la forme de la feuille de verre bombée. La pression et le volume du gaz dans le conduit 8 étant ramenés à leur niveau inférieur, la feuille de verre bombée 1' est déposée sur l'anneau de soutien et évacuée de la station de bombage.

Le courant de gaz venant agir sur la feuille de verre a sur toute sa section un profil de pression essentiellement uniforme. Pendant que la feuille 1 est soulevée au-dessus des rouleaux 4 et jusqu'à son contact avec la forme de bombage 12, une pression quasi-identique règne sur toute la face de la feuille. Ceci n'est plus vrai dès que la feuille touche la forme de bombage 12. A partir de ce moment, le gaz heurtant la feuille 1 doit s'échapper latéralement, le long de la surface de la feuille et est dévié vers le haut, vers le bord de la forme de bombage. Dans les régions du bords de la feuille 1', les courants déviés agissent de deux façons : ils affaiblissent l'effet direct des courant ascendants, c'est à dire de la composante dynamique de pression qui agit selon la vertical car ces courants ascendants sont déviés selon une direction horizontale et étouffent dans les régions des bords l'effet des courants ascendants qui les croisent. D'autre part, la composante dynamique de pression du gaz s'écoulant radialement le long de la feuille 1' n'a pas de composante de pression normale à la feuille de verre et donc le gaz s'écoulant le long de la feuille de verre ne participe pas au processus de bombage proprement dit. Les forces de bombage s'exerçant sur les bords de la feuille de verre sont de ce fait d'autant plus faibles que la surface de la feuille est grande et que l'angle Alpha entre l'horizontale et la tangente à l'extrémité de la feuille est grand pendant le processus de bombage. La force de bombage P produite de cette manière ne suffit plus pour appliquer exactement la feuille de verre 1' contre la forme de bombage 12.

La figure 2 illustre une première possibilité d'acroissement de la force de bombage aux endroits critiques, avec un coût très modéré. Dans ce but, aux endroits nécessitant le plus fort bombage, la vitesse d'écoulement de la composante de courant passant le long de la feuille 1' est réduite grâce au montage d'un tôle chicane 16. La tôle chicane 16 est disposée quasi-perpendiculairement à la direction d'écoulement du gaz. Le courant gazeux est de ce fait freiné et contrain à s'infiltrer dans la fente 18 ménagée entre le bord de la feuille 1′ et la tôle chicane 16 et à s'évacuer vers le haut par la fente 20 entre la partie supérieure de la tôle chicane 16 et le bord de la forme de bombage 12. Grâce à la réduction de la vitesse d'écoulement de la composante du courant de gaz passant le long du verre, sous la feuille la pression statique est accrue (conformément à la constante physique qui veut que le somme des pressions dynamique et statique d'un filet de courant soit constante). Cette pression statique agit maintnant comme une force de bombage plus élevée P′. Simultanément, la pression statique dans l'espace 22 est diminuée car la fente 20 est au contact direct de la chambre située au-dessus de la forme de bombage 12 dans laquelle règne dans l'ensemble une pression statique plus faible.

Les mesures prises selon l'invention sont particulièrement efficaces si la tôle chicane 16 est conformée et placée de manière telle que la largeur de la fente 18 formée par la feuille 1′ et la tôle chicane 16 soit plus petite que la largeur B de la fente 20 formée par le bord de la forme de bombage 12 et la tôle chicane 16. La largeur B de la fente 20 est par exemple comprise entre 5 et 20 mm, alors que la largeur A de la fente 18 est de préférence entre 2 et 10 mm. La hauteur H des parties de la tôle-chicane 16 qui agissent comme déflecteurs s'élève par exemple entre 10 et 100 mm et de préférence entre 20 et 50 mm.

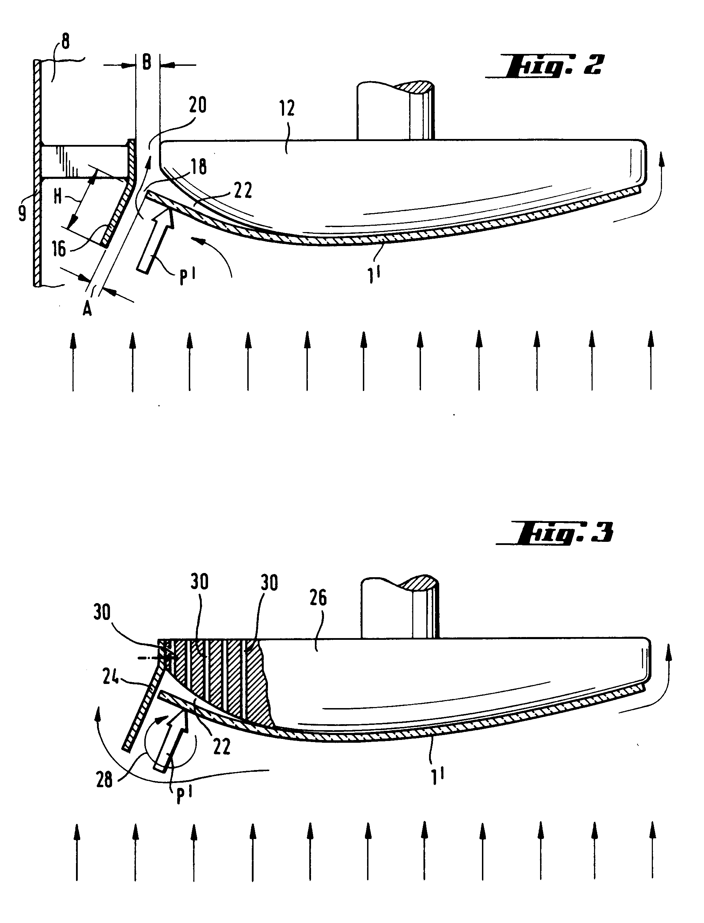

Dans l'exemple de réalisation représenté à la figure 3, le même effet souhaité est obtenu d'une manière quelque peu différente. Dans ce cas, la tôle chicane 24 est disposée directement au bord de la forme de bombage 26, empêchant ainsi toute circulation du gaz entre la tôle chicane 24 et la forme de bombage 26. Par conséquence, en amont de la tôle chicane 24 se forme un tourbillon de gaz 28 et les courants dirigés de ce côté sont contraints de contourner la tôle chicane 24. Le long même de la feuille de verre, il n'y a pas de courants radiaux. En raison de la diminution de l'énergie cinétique, comme la somme totale des énergies de pression reste constante, la composante statique de pression est sensiblement augmentée ce qui signifie une augmentation de la force de bombage effective P′.

La dépression relative nécessaire à l'arrière de la feuille de verre 1′ est obtenue par les canaux 30 qui traversent la forme de bombage 26 et relient l'espace 22 entre la feuille 1′ et la forme de bombage 26 avec l'arrière de la forme de bombage 26, où règne une pression statique plus faible.

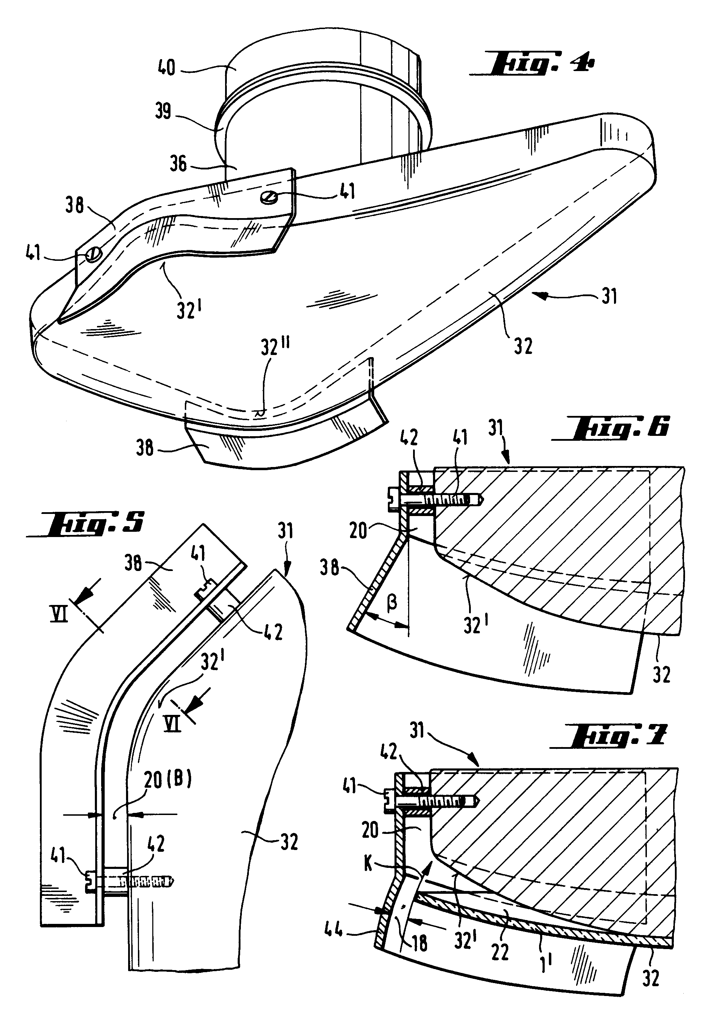

Sur les figures 4 à 7 est représenté un exemple concret de réalisation d'une forme de bombage conforme à l'invention, prévue pour une vitre latérale arrière d'une automobile. Pour ce qui est de son pourtour et de son galbe, la forme de bombage 31 est exactement à la taille et à la forme de la feuille de verre bombée. La forme de bombage 31 - qui peut être en céramique ou en métal - est munie d'une embase cylindrique 40 raccordée par la bride 39 au tuyau 40 disposé à l'intérieur de la station de bombage.

Dans les régions des bords 32′ et 32″ de la face de bombage 32, l'expérience a montré que sont nécessaires des forces de bombage plus élevées car il s'agit d'une part de zones d'angles at d'autre part dans ces régions, la tangente à la forme de bombage présente par rapport à l'horizontale un angle plus important que dans les autres régions. C'est pourquoi, dans ces régions 32′ et 32″, des tôles-chicanes 38 sont disposées sur le bord de la forme de bombage 31, et d'une manière telle qu'elles laissent une fente 20 (B) d'environ 10 mm entre le côté de la forme de bombage 31 et la tôle chicane attenante à ce côté. Les tôles chicanes 38 sont fixées par des vis 41 à la forme de bombage 31, des douilles 42 maintenant l'écartement nécessaire par rapport à la forme de bombage. L'angle d'inclinaison Beta que forme la tôle chicane (38) avec la vertical est choisi en fonction de la courbure de la forme de bombage de manière à ce que la face de la tôle chicane servant de déflecteur soit quasi parrallèle à la direction d'écoulement du courant gazeux longeant la feuille de verre. Dans certains cas, il peut être avantageux d'opter pour une disposition telle que la fente entre la tôle chicane et le bord de la feuille de verre soit de dimension constante pendant tout le processus de bombage, c'est à dire pendant tout le déplacement de la feuille de verre. Dans ce cas, la tôle chicane 44 a un profil correspondant à celui représenté à la figure 7, La tôle chicane 44 présente une courbure qui correspond à la courbe (K) que décrit la bord de la feuille de verre 1′ pendant le processus de formage. De cette manière, on peut avoir une fente 18 très mince pendant l'ensemble du processus de formage, ce qui signifie encore une amélioration des rapports de pression pendant le formage.

## Revendications

1. Procédé de bombage d'une feuille de verre (1) échauffée à la température de formage utilisant un courant gazeux chaud de large section au moyen duquel la feuille de verre est pressée contre une forme de bombage (12, 26, 31), **caractérisé en ce qu'**au moins dans des régions choisies de la feuille de verre, la vitesse des composantes de courant circulant radialement le long de la feuille de verre (1), est diminuée grâce à des déflecteurs (16, 24, 38, 44) disposés sur le trajet de ces composantes de courant et en ce que dans ces régions de la feuille de verre (1) la composante de pression statique du courant est augmentée.

2. Procédé selon la revendication 1, **caractérisé en ce que** la pression statique régnant dans l'espace (22) situé entre les bords de la feuille de verre (1) et la surface de la forme de bombage (12, 26, 31) est diminué grâce à une connexion de cet espace intercalaire (22) avec l'arrière de la forme de bombage.

3. Procédé selon la revendication 1 ou 2, **caractérisé en ce que,** grâce à une réduction de la section du courant, les composantes du courant longeant les bords concernés de la feuille de verre (1) passent près de l'extrémité de la forme de bombage (12) le long de l'espace intermédiaire (22) entre la forme de bombage (12) et la feuille de verre (1).

4. Procédé selon la revendication 2 ou 3, **caractérisé en ce que** les courants de gaz longeant radialement les régions des bords en cause de la feuille de verre (1) sont barrés totalement par des déflecteurs (24) disposé sur la forme de bombage (26).

5. Dispositif de bombage d'une feuille de verre (1) comportant un four (2), des moyens de transport (4) du verre, une forme de bombage (12, 26, 31) placée dans un conduit (8) et des moyens pour engendrer dans ce conduit (8) un courant de gaz chaud de large section qui presse les feuilles de verre contre la forme de bombage (12, 26, 31), **caractérisé en ce que** sur les bords de la forme de bombage (12, 26, 31) sont disposés au moins à des endroits choisis des tôles-chicanes (16, 24, 38, 44) orientées quasi normalement à la tangeante de l'extrémité de la face de formage de la forme de bombage.

6. Dispositif selon la revendication 5, **caractérisé en ce que** la forme de bombage (26) est munie dans les régions des bords voisines des tôles-chicanes (24) de canaux (30) la traversant.

7. Dispositif selon la revendication 5 ou 6, **caractérisé en ce que** les tôles-chicanes (16, 38) sont fixées sur la forme de bombage (31) en formant une fente (20) entre la tôle-chicane (16, 38) et le bord de la forme de bombage (31) à une distance (B) d'environ 5 à 20 mm.

8. Dispositif selon la revendication 5 ou 6, **caractérisé en ce que** les tôles-chicanes (24) sont disposées directement aux bords de la forme de bombage (26).

9. Dispositif selon la revendication 5 ou 6, **caractérisé en ce que** les tôles-chicanes (16) sont fixées aux parois (9) du conduit (8).

10. Dispositif selon l'une des revendications 6 à 9, **caractérisé en ce que** les tôles-chicanes (16, 24, 38, 44) présentent une hauteur (H) comprise entre 10 et 100 mm et de préférence entre 20 et 50 mm.

11. Dispositif selon une ou plusieurs des revendications 6 à 10, **caractérisé en ce que** les tôles-chicanes (16, 24, 38, 44) sont profilées d'une manière correspondant au chemin décrit par le bord de la feuille de verre (1) pendant le processus de bombage.

## Claims

1. Method of curving a glass sheet (1), heated to the moulding temperature, using a hot gaseous current of large cross-section, by means of which the glass sheet is pressed against a curving mould (12, 26, 31), characterized in that, at least in chosen regions of the glass sheet, the velocity of the current components travelling radially along the glass sheet (1) is reduced by means of deflectors (16, 24, 38, 44), disposed on the path of these current components, and in that, in these regions of the glass sheet (1), the static pressure component of the current is increased.

2. Method according to Claim 1, characterized in that the static pressure existing in the space (22) situated between the edges of the glass sheet (1) and the surface of the curving mould (12, 26, 31) is decreased by means of a connection of this intermediate space (22) with the rear of the curving mould.

3. Method according to Claim 1 or 2, characterized in that, as a result of a reduction in the cross-section of the current, the current components skirting the edges concerned of the glass sheet (1) pass near the extremity of the curving mould (12) along the intermediate space (22) between the curving mould (12) and the glass sheet (1).

4. Method according to Claim 2 or 3, characterized in that the gas currents skirting radially the regions of the edges in question of the glass sheet (1) are totally barred by deflectors (24) disposed on the curving mould (26).

5. Device for curving a glass sheet (1), comprising a furnace (2), conveying means (4) for the glass, a curving mould (12, 26, 31) placed in a duct (8) and means for creating in this duct (8) a hot gas current of large cross-section which presses the glass sheets against the curving mould (12, 26, 31), characterized in that, on the edges of the curving mould (12, 26, 31) there are disposed, at least at chosen locations, baffle plates (16, 24, 38, 44) orientated quasi-perpendicularly to the tangent to the extremity of the shaping face of the curving mould.

6. Device according to Claim 5, characterized in that the curving mould (26) is provided, in the regions of the edges adjacent to the baffle plates (24), with channels (30) passing through it.

7. Device according to Claim 5 or 6, characterized in that the baffle plates (16, 38) are fixed to the curving mould (31) to form a slot (20) between the baffle plate (16, 38) and the edge of the curving mould (31) at a distance (B) of approximately 5 to 20 mm.

8. Device according to Claim 5 or 6, characterized in that the baffle plates (24) are disposed directly at the edges of the curving mould (26).

9. Device according to Claim 5 or 6, characterized in that the baffle plates (16) are fixed to the walls (9) of the duct (8).

10. Device according to one of Claims 6 to 9, characterized in that the baffle plates (16, 24, 38, 44) have a height (H) comprised between 10 and 100 mm and preferably between 20 and 50 mm.

11. Device according to one or more of Claims 6 to 10, characterized in that the baffle plates (16, 24, 38, 44) are profiled in a manner corresponding to the path described by the edge of the glass sheet (1) during the curving process.

**Patentansprüche**

1. Verfahren zum Biegen einer auf Biegetemperatur erwärmten Glasscheibe (1) mit Hilfe eines heißen Gasstroms mit großflächigem Querschnitt, durch den die Glasscheibe gegen eine Biegeform (12,26,31) gepreßt wird, **dadurch gekennzeichnet,** daß wenigstens in ausgewählten Bereichen der Glasscheibe die Geschwindigkeit der in radialer Richtung entlang der Glasscheibe (1) strömenden Teilströme durch auf dem Weg dieser Teilströme angeordneten Staubleche (6,24,38,44) verringert und dadurch in diesen Bereichen der Glasscheibe (1) der statische Druckanteil des Gasstroms erhöht wird.

2. Verfahren nach Anspruch 1, dadurch gekennzeichnet, daß der in dem Raum (22) zwischen den Randbereichen der Glasscheibe (1) und der Oberfläche der Biegeform (16,26,31) herrschende statische Gasdruck durch Verbindung dieses Zwischenraums (22) mit dem Raum hinter der Biegeform verringert wird.

3. Verfahren nach Anspruch 1 oder 2, dadurch gekennzeichnet, daß durch Verringerung des Strömungsquerschnitts die entlang den betreffenden Randbereichen der Glasscheibe (1) fließenden Teilströme am Ende der Biegeform (12) an dem durch die Biegeform (12) und die Glasscheibe (1) gebildeten Zwischenraum (22) vorbeigeführt werden.

4. Verfahren nach Anspruch 2 oder 3, dadurch gekennzeichnet, daß die entlang den betreffenden Randbereichen der Glasscheibe (1) in radialer Richtung fließenden Teilströme durch an der Biegeform (26) angeordnete Staubleche (24) vollständig gesperrt werden.

5. Vorrichtung zum Biegen einer Glasscheibe (1) mit einem Ofen (2), Transportmitteln (4) für das Glas, einer innerhalb eines Kanals angeordneten Biegeform (12,26,31) und Mitteln zum Erzeugen eines heißen Gasstroms großen Querschnitts in diesem Kanal (8), wodurch die Glasscheiben gegen die Biegeform (12,26,31) gepreßt werden, dadurch gekennzeichnet, daß an den Rändern der Biegeform (12,26,31) wenigstens an ausgewählten Stellen etwa rechtwinklig zur Endtangente der Formfläche der Biegeform ausgerichtete Staubleche (16,24,38,44) angeordnet sind.

**6.** Vorrichtung nach Anspruch 5, dadurch gekennzeichnet, daß die Biegeform (26) in den den Staublechen (24) benachbarten Randbereichen mit die Biegeform durchdringenden Kanälen (30) versehen ist.

**7.** Vorrichtung nach Anspruch 5 oder 6, dadurch gekennzeichnet, daß die Staubleche (16,38) unter Bildung eines Spaltes (20) zwischen dem Staublech (16,38) und dem Rand der Biegeform (31) in einem Abstand (B) von etwa 5 bis 20 mm an der Biegeform (31) befestigt sind..

**8.** Vorrichtung nach Anspruch 5 oder 6, dadurch gekennzeichnet, daß die Staubleche (24) unmittelbar an den Rändern der Biegeform (26) befestigt sind.

**9.** Vorrichtung nach Anspruch 5 oder 6, dadurch gekennzeichnet, daß die Staubleche (16) an den Wänden (9) des Kanals (8) befestigt sind.

**10.** Vorrichtung nach einem der Ansprüche 6 bis 9, dadurch gekennzeichnet, daß die Staubleche (16,24,38,44) eine Höhe (H) von 10 bis 100 mm, und vorzugsweise von 20 bis 50 mm aufweisen.

**11.** Vorrichtung nach einem oder mehreren der Ansprüche 6 bis 10, dadurch gekennzeichnet, daß die Staubleche (16,24,38,44) entsprechend dem von dem Rand der Glasscheibe (1) während des Biegevorgangs beschriebenen Weg profiliert sind.

**Fig. 1**

_Fig. 2_

_Fig. 3_

*Fig. 4*

*Fig. 5*

*Fig. 6*

*Fig. 7*